# EUROPÄISCHE PATENTSCHRIFT

(11) **EP 3 289 577 B1**
(45) Veröffentlichungstag und Bekanntmachung des Hinweises auf die Patenterteilung: **12.06.2019**
(21) Anmeldenummer: 16716041.5
(22) Anmeldetag: 13.04.2016
(51) Int. Cl.: G08G 1/16, G08G 1/14, B62D 15/02, G05D 1/02

(54) **FREIGABE EINES AUTONOMEN PARKSYSTEMS**
RELEASE OF AN AUTONOMOUS PARKING SYSTEM
DÉBLOCAGE D'UN SYSTÈME DE STATIONNEMENT AUTONOME

(30) Priorität: 30.04.2015 DE 102015208062
(43) Veröffentlichungstag der Anmeldung: 07.03.2018
(73) Patentinhaber: Robert Bosch GmbH, 70442 Stuttgart (DE)
(72) Erfinder: NORDBRUCH, Stefan, 70806 Kornwestheim (DE)
(86) Internationale Anmeldenummer: PCT/EP2016/058063
(87) Internationale Veröffentlichungsnummer: WO 2016/173837

(56) Entgegenhaltungen:
- DE-A1-102008 021 154
- KR-A- 20150 038 776
- US-A1- 2010 156 672

## Beschreibung

Die Erfindung betrifft ein autonomes Parksystem. Insbesondere betrifft die Erfindung die Überprüfung der Betriebssicherheit des autonomen Parksystems.

### Stand der Technik

Ein Parksystem umfasst einen Parkplatz mit mehreren Stellflächen zum Abstellen von Kraftfahrzeugen, wobei im Parksystem ein Kraftfahrzeug auf einer Strecke zwischen einer Abstellfläche und einem der Stellplätze autonom gesteuert werden kann. Ein solcher Vorgang ist unter der Bezeichnung Automated Valet Parking (AVP) bekannt. Soll ein Kraftfahrzeug auf dem Parkplatz geparkt werden, so genügt es, wenn der Fahrer das Kraftfahrzeug zur Abstellfläche bringt und dort verlässt. Das Kraftfahrzeug fährt dann autonom zu einem der Parkplätze, der ihm beispielsweise durch ein Verwaltungssystem zugewiesen ist. Soll das Kraftfahrzeug wieder abgeholt werden, so kann es in umgekehrter Richtung autonom von der Stellfläche zur Abstellfläche fahren, wo der Fahrer zusteigt und das Kraftfahrzeug außerhalb des Parkplatzes wie gewohnt selbst steuert.

Aus KR 20150038776 A ist ein Fahrassistenzsystem zum vollautomatisierten Parken eines Fahrzeugs bekannt, das Informationen über das Fahrzeugumfeld von einem oder mehreren Infrastruktur-Sensoren empfängt. Infrastruktursensoren sind Sensoren, die außerhalb des Fahrzeugs in dem Parkbereich fest installiert sind. Ein zentrales Parkmanagement-System verwaltet die Parkplätze und weist dem Fahrzeug einen Parkplatz zu, den es automatisiert ansteuert, wobei die Bahnplanung und Routenführung basierend auf den Daten der Infrastruktur-Sensoren erfolgen. Dabei werden verschiedene Trajektorien simuliert und mit einer real befahrenen Route verglichen.

Obwohl es unterschiedliche Ansätze zur Kooperation von fahrzeugeigenen und fahrzeugfremden Systemen bei der Befahrung der Strecke gibt, kann die Paarung aus dem Kraftfahrzeug und dem Parkplatz ungünstig sein, sodass die Strecke nicht optimal, nicht vollständig oder nicht kollisionsfrei abgefahren werden kann. Erschwerend kommt hinzu, dass eine derartige Inkompatibilität auch nach einem erfolgreichen Befahren der Strecke entstehen kann, beispielsweise wenn eine bauliche Veränderung am Parkplatz oder am Kraftfahrzeug vorgenommen wird oder sich das Zusammenspiel von bordeigenen und bordfremden Systemen ändert.

Es ist daher Aufgabe der vorliegenden Erfindung, eine Technik anzugeben, mittels derer ein AVP-Parksystem verbessert überprüft werden kann. Die Erfindung löst diese Aufgabe mittels der Gegenstände der unabhängigen Ansprüche. Unteransprüche geben bevorzugte Ausführungsformen wieder.

### Offenbarung der Erfindung

Ein Parksystem umfasst einen Parkplatz mit mehreren Stellflächen zum Abstellen von Kraftfahrzeugen, wobei im Parksystem ein Kraftfahrzeug auf einer Strecke zwischen einer Abstellfläche und einem der Stellplätze autonom gesteuert werden kann. Ein Überprüfungsverfahren für das Parksystem umfasst Schritte des autonomen Befahrens der Strecke mit einem Testfahrzeug, des Bestimmens, dass das Abfahren der Strecke korrekt erfolgt, und des Freigebens des Parksystems zur Benutzung mit Fahrzeugen, die dem Fahrzeugtyp des Testfahrzeugs entsprechen.

Dadurch kann einerseits eine Freigabe für das Kraftfahrzeug erteilt werden, andererseits kann eine bereits erteilte Freigabe überprüft werden. Sollten sich Probleme beim Befahren der Strecke zeigen, so kann die Freigabe für den bestimmten Fahrzeugtyp zurückgezogen oder ausgesetzt werden. Ein Schaden beim Benutzen des Parksystems durch ein anderes Kraftfahrzeug dieses Fahrzeugtyps kann dadurch vermieden werden.

Bevorzugterweise werden mit dem Testfahrzeug mehrere Strecken, jeweils zwischen der Abstellfläche und einer Stellfläche, abgefahren. Je mehr Strecken auf dem Parkplatz abgefahren werden, desto größer kann die Sicherheit sein, dass der Parkplatz mit einem anderen Kraftfahrzeug des gleichen Fahrzeugtyps wie das Testfahrzeug problemlos befahrbar ist. Eine Freigabe des Parksystems für den entsprechenden Fahrzeugtyp kann dadurch eine erhöhte Sicherheit aufweisen.

In einer Ausführungsform wird eine repräsentative Stichprobe an Strecken aus einer Menge möglicher Strecken zwischen allen Stellflächen und der Abstellfläche abgefahren. Dabei kann die Stichprobe statistisch, beispielsweise zufallsbasiert, oder auf der Basis einer Heuristik bestimmt werden.

In noch einer weiteren Ausführungsform werden ausreichend Strecken zwischen Stellplätzen und der Abstellfläche befahren, bis alle Verkehrsflächen des Parkplatzes abgefahren sind. Optional können zusätzlich einer oder mehrere Ein- oder Ausparkvorgänge an unterschiedlichen Stellplätzen durchgeführt werden. Die Überprüfung des Parkplatzes auf Benutzbarkeit mit einem bestimmten Fahrzeugtyp kann dadurch schneller durchgeführt werden als wenn jeder Weg zwischen jeder Stellfläche und der Abstellfläche wenigstens einmal befahren wird. Dabei wird davon Gebrauch gemacht, dass beispielsweise benachbarte Stellflächen zugeordnete Strecken aufweisen, die sich üblicherweise nur wenig unterscheiden. Häufig reicht es, eine Strecke zu einer weit entlegenen Stellfläche zu befahren, um dadurch gleichzeitig die Strecken zu allen Stellflächen zu befahren, an denen die erstgenannte Strecke vorbeiführt.

In einer Ausführungsform wird im Rahmen des Befahrens eine Stelle des Parkplatzes bestimmt, an der das Abfahren der Strecke nicht korrekt erfolgt. Seitens des Parksystems kann dann im Bereich der Stelle eine Nachbesserung erfolgen, um die Befahrbarkeit des Parkplatzes mit Kraftfahrzeugen des Fahrzeugtyps des Testfahrzeugs herzustellen. Wird das Verfahren verwendet, um eine bereits bestehende Freigabe zu überprüfen, so kann auf die beschriebene Weise eine Stelle identifiziert werden, an der nachträglich eine bauliche Maßnahme durchgeführt wurde, die das Zusammenspiel zwischen Parkplatz und Kraftfahrzeug beeinträchtigen kann. Insbesondere können dadurch bauliche Maßnahmen identifiziert werden, die unbewusst oder unbemerkt von einer verantwortlichen Person realisiert wurden.

Es ist besonders bevorzugt, dass die Strecke mit mehreren unterschiedlichen Testfahrzeugen abgefahren wird. Zwei oder mehr der Testfahrzeuge können gleichzeitig auf dem Parkplatz autonom unterwegs sein. Dadurch kann eine Freigabe des Parksystems für Kraftfahrzeuge unterschiedlicher Fahrzeugtypen schneller bzw. effizienter erstellt werden.

In einer besonders bevorzugten Ausführungsform umfassen wenigstens zwei der Testfahrzeuge jeweils eines oder mehrere Steuersysteme und unterscheiden sich lediglich in Versionen von Steuerprogrammen der Steuersysteme. Dadurch kann die Kompatibilität des Parksystems mit Fahrzeugtypen überprüft werden, die mit bloßem Auge an einem Kraftfahrzeug nicht unterschieden werden können. Auf diese Weise kann dem Umstand Rechnung getragen werden, dass Steuerprogramme von Steuersystemen an Bord des Kraftfahrzeugs auch ohne Wissen eines Besitzers oder Benutzers aktualisiert werden können und dabei andere Steuerprogramme bzw. Steuersysteme an Bord des Kraftfahrzeugs beeinflussen können. Die Art der autonomen Steuerung des Kraftfahrzeugs kann dadurch verändert werden, sodass eine Unverträglichkeit mit dem Parkplatz durch die Aktualisierung entstehen kann.

Eine Auswertung des Befahrens mittels des Testfahrzeugs kann in unterschiedlichen Ausführungsformen sofort oder erst nach Abschluss der Testfahrt erfolgen. In der ersten Variante können Ergebnisse der Auswertung unmittelbar zur Verfügung stehen und gegebenenfalls für eine modifizierte oder wiederholte Testfahrt verwendet werden. In der zweiten Variante kann die Auswertung umfangreichere und damit langwieriger sein, ohne den Testbetrieb dadurch zu stören oder zeitlich auszudehnen.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Ein Testfahrzeug zur Durchführung des oben beschriebenen Verfahrens ist dazu eingerichtet, die Strecke mit unterschiedlichen Versionen der Steuerprogramme abzufahren. Dadurch kann die Zahl der erforderlichen Testfahrzeuge für die Freigabe des Parksystems verringert sein. Dazu kann das Testfahrzeug dazu eingerichtet sein, die Versionen seiner Steuerprogramme bei aufeinander folgenden Testfahrten entsprechend anzupassen oder es können mehrere Steuerprogramme in unterschiedlichen Versionen parallel betrieben werden, um im Rahmen von nur einer Testfahrt gleich mehrere Versionen zu testen.

Allgemein ist bevorzugt, dass das Testfahrzeug gegenüber einem typgleichen Kraftfahrzeug, das üblicherweise im Bereich des Parksystems belegt wird, über zusätzliche Sensoren und/oder Dokumentationssysteme zur Nachverfolgung einer Testfahrt verfügt.

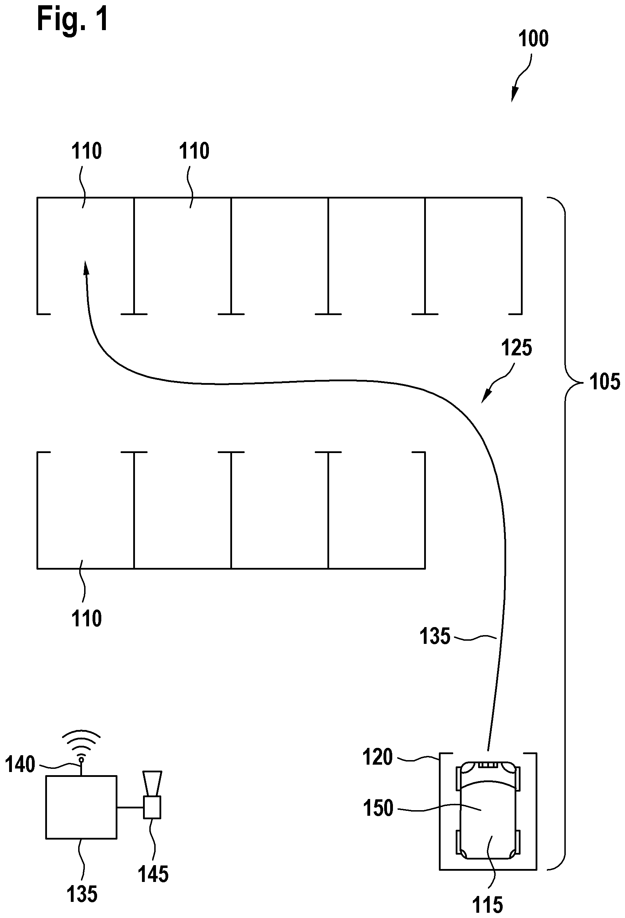

Die Erfindung wird nun mit Bezug auf die beigefügte Figur genauer beschrieben, wobei
Fig. 1 eine schematische Darstellung eines Parksystems darstellt.

Figur 1 zeigt in schematischer Weise ein Parksystem 100, das einen Parkplatz 105 mit mehreren Stellflächen 110, jeweils zum Abstellen eines Kraftfahrzeugs 115, umfasst. Außerdem umfasst das Parksystem 100 eine Abstellfläche 120, wo ein Kraftfahrzeug 115 fahrergesteuert abgestellt oder durch einen Fahrer abgeholt werden kann. Zwischen der Abstellfläche 120 und den Stellflächen 110 ist eine Verkehrsfläche 125 vorgesehen, die durch das Kraftfahrzeug 115 befahren werden kann. Eine Strecke 135 führt von der Abstellfläche 120 zu einer der Stellflächen 110 oder in umgekehrter Richtung.

Das Parksystem 100 ist für ein automatisches Valet Parken (AVP) eingerichtet. Dazu kann ein Fahrer sein Kraftfahrzeug 115 auf der Abstellfläche 120 abstellen, von wo aus das Kraftfahrzeug 115 autonom auf der Strecke 135 zu einer vorbestimmten Stellfläche 110 gesteuert wird. Möchte der Fahrer das Kraftfahrzeug 115 später wieder abholen, so wird das Kraftfahrzeug 115 autonom von der Stellfläche 110 auf einer entsprechenden Strecke 135 zurück zur Abstellfläche 120 geführt, wo der Fahrer das Kraftfahrzeug 115 in Empfang nehmen kann.

Zum autonomen Führen des Kraftfahrzeugs 115 auf der Strecke 135 sind unterschiedliche Herangehensweisen bekannt. In einer ersten Ausführungsform wird das Kraftfahrzeug 115 durch eine Steuereinrichtung 135 gesteuert, die Teil des Parksystems 100 und außerhalb des Kraftfahrzeugs 115 angebracht ist. Die Steuereinrichtung 135 kann beispielsweise eine drahtlose Schnittstelle 140 aufweisen, mittels derer sie mit dem Kraftfahrzeug 115 in Kontakt tritt. Zur Überwachung des Kraftfahrzeugs 115 können eine oder mehrere Abtasteinrichtungen 145 vorgesehen sein, beispielsweise eine Kamera, eine Lichtschranke, ein Entfernungsmesser oder ein anderes Gerät.

In einer zweiten Ausführungsform fährt das Kraftfahrzeug 115 auf der Basis von Informationen, die es von der Steuereinrichtung 135 empfängt, wobei die Steuereinrichtung 135 den Fahrablauf des Kraftfahrzeugs 115 auf der Strecke 135 aktiv unterstützt. Diese Ausführungsform wird auch als kooperative Infrastruktur bezeichnet.

In einer dritten Ausführungsform fährt das Kraftfahrzeug 115 ausschließlich auf der Basis vorbestimmter Daten, beispielsweise einem Lageplan des Parkplatzes 105 und einer Position einer anzusteuernden Stellfläche 110.

Ungeachtet der Realisierbarkeit der vorgenannten Ausführungsformen zur autonomen Steuerung eines Kraftfahrzeugs 115 auf einer Strecke 135 auf einem Parkplatz 105 eines Parksystems 100 ist ganz allgemein sicherzustellen, dass bei autonomen Fahren des Kraftfahrzeugs 115 auf der Strecke 135 keine Gefahr droht. Dazu wird üblicherweise das Zusammenspiel zwischen einem bestimmten Fahrzeugtyp des Kraftfahrzeugs 115 und einem konkreten Parksystem 100 überprüft. Verlaufen alle Tests zufriedenstellend, so kann eine Freigabe zur Benutzung des Parksystems 100 mit einem Kraftfahrzeug 115 des getesteten Fahrzeugs erfolgen. Eine Liste freigegebener Fahrzeugtypen umfasst üblicherweise mehrere Einträge. Die Freigabe wird üblicherweise nach dem Erstellen des Parksystems 100 und vor seiner allgemeinen Benutzung erteilt.

Wird eine bauliche Veränderung im Rahmen des Parksystems 100 durchgeführt, beispielsweise das Hinzufügen oder Entfernen einer Stellfläche 110, das Verändern eines Steuerprogramms einer Infrastruktureinrichtung, beispielsweise einer Wechselwegweisung, einer Schranke oder einer Ampel, oder wird die Konfiguration eines Kraftfahrzeugs 115, für das bereits eine Freigabe existiert, verändert, so kann das autonome Befahren des Parksystems 100 durch das Kraftfahrzeug 115 gestört sein. Es wird daher vorgeschlagen, die Freigabe ereignisgesteuert, zeitgesteuert oder sonst wie regelmäßig zu überprüfen.

Dazu wird ein Testfahrzeug 150 auf der Strecke 135 autonom gesteuert und es wird überwacht, ob die Steuerung vorgegebenen Kriterien entspricht. Insbesondere kann überprüft werden, ob ein gewünschter, geplanter oder optimaler Ablauf gewährleistet ist. In einer Ausführungsform kann der Ablauf mit vorbestimmten Toleranzgrenzen vorgegeben sein und ein Verlassen der Toleranzgrenzen kann dazu führen, dass die Fahrt des Testfahrzeugs 150 auf der Strecke 135 als nicht erfolgreich bestimmt wird. Das Testfahrzeug 150 kann die Strecken 135, die auf dem Parkplatz 105 bestehen, erschöpfend abfahren. Dabei können Ein- bzw. Ausparkvorgänge an einer Stellfläche 110 an einem Ende der Strecke 135 umfasst sein oder nicht. In einer anderen Ausführungsform werden nur einige vorbestimmte Strecken 135 auf dem Parkplatz 105 abgefahren. Diese Strecken 135 können beispielsweise stichprobenartig ausgewählt werden. Die Strecken 135 können auch so gewählt werden, dass alle Verkehrsflächen 125 auf dem Parkplatz 105 abgefahren werden. Jede Strecke 135 kann einmal oder mehrfach befahren werden. Existieren zwei unterschiedliche Strecken 135 zwischen einer Stellfläche 110 und der Abstellfläche 120, so können sie als einzelne Strecken 135 gezählt werden.

Zur Überwachung einer Testfahrt auf der Strecke 135 ist das Testfahrzeug 150 bevorzugterweise mit zusätzlichen Sensoren ausgestattet, die die Qualität der durchgeführten Befahrung aufnehmen und/oder den Abfahrprozess dokumentieren können. In einer Ausführungsform ist an Bord des Testfahrzeugs 150 auch eine Verarbeitungseinrichtung vorgesehen, um auf der Basis der abgetasteten Daten nicht nur zu bestimmen, dass die Testfahrt erfolgreich ist oder nicht, sondern auch, welcher Art eine Störung sein könnte. Alternativ dazu kann diese Verarbeitung auch seitens der Steuereinrichtung 135 erfolgen. Dazu müssen üblicherweise Daten über den Verlauf der Testfahrt vom Testfahrzeug 150 an die Steuereinrichtung 135 übermittelt werden. Im Rahmen der Auswertung kann insbesondere bestimmt werden, ob die Testfahrt deshalb nicht erfolgreich ist, weil sich eine Veränderung seitens des Parksystems 100 bzw. des Parkplatzes 105 ergeben hat, oder deshalb, weil sich eine Veränderung seitens des Testfahrzeugs 150 ergeben hat.

Eine Änderung seitens des Testfahrzeugs 150 kann beispielsweise eine aktualisierte Version eines Steuerprogramms eines Steuersystems umfassen, welches für das autonome Führen des Testfahrzeugs 150 auf der Strecke 135 verwendet wird. Dieses Steuersystem kann insbesondere eine Längs- oder Quersteuerung des Testfahrzeugs 150 umfassen.

Um Freigaben möglichst für mehrere unterschiedliche Fahrzeugtypen von Kraftfahrzeugen 115 zu erreichen, kann die Strecke 135 mit unterschiedlichen Testfahrzeugen 150 befahren werden. In einer Ausführungsform ist das Testfahrzeug 150 dazu eingerichtet, mehrere unterschiedliche Fahrzeugtypen zu emulieren, indem insbesondere eine oder mehrere Steuereinrichtungen an Bord des Testfahrzeugs 150 mit entsprechenden Steuerprogrammen betrieben werden. Bevorzugterweise kann das Testfahrzeug 150 mehrere Kombinationen unterschiedlicher Versionen von Steuerprogrammen eines Fahrzeugtyps aktivieren, sodass der betreffende Fahrzeugtyp umfassend in allen Aktualisierungsversionen überprüft werden kann. In einer weiteren Ausführungsform ist das Testfahrzeug 150 dazu eingerichtet, mehrere Versionen von Steuerprogrammen parallel zu betreiben, um unterschiedliche Aktualisierungsversionen des Fahrzeugtyps gleichzeitig zu überprüfen.

Ein Ergebnis der Befahrung der Strecke 135 kann sofort ("online") oder im Rahmen einer nachfolgenden Datenverarbeitung ("offline") bereitgestellt werden. Es kann auch eine kombinierte Verarbeitung sofort und nach Durchführung der Fahrversuche realisiert sein, wobei beispielsweise unterschiedliche Tests ausgewertet werden oder zunächst nur eine Grobüberprüfung der Funktionalität und später eine Feinanalyse weiterer Betriebsparameter erfolgt. In einer besonders bevorzugten Ausführungsform wird auf der Basis der Rohdaten und/oder der verarbeiteten Daten bestimmt, welcher Art ein Problem ist, das eine Freigabe des Kraftfahrzeugs 115 eines entsprechenden Fahrzeugtyps für das Parksystem 100 verhindert. In noch einer weiteren Ausführungsform kann ein Hinweis bestimmt werden, wie die Situation zu beheben bzw. zu entschärfen sein könnte.

## Patentansprüche

1. Überprüfungsverfahren für ein Parksystem (100), das einen Parkplatz (105) mit mehreren Stellflächen (110) zum Abstellen von Kraftfahrzeugen (115) umfasst, wobei im Parksystem (100) ein Kraftfahrzeug (115) auf einer Strecke (135) zwischen einer Abstellfläche (120) und einem der Stellplätze autonom gesteuert werden kann, und das Verfahren durch folgende Schritte gekennzeichnet ist:
- autonomes Befahren der Strecke (135) mit einem Testfahrzeug (150);
- Bestimmen, dass das Abfahren der Strecke (135) korrekt erfolgt; und
- Freigeben des Parksystems (100) zur Benutzung mit Fahrzeugen, die dem Fahrzeugtyp des Testfahrzeugs (150) entsprechen.

2. Verfahren nach Anspruch 1, wobei mit dem Testfahrzeug (150) mehrere Strecken (135), jeweils zwischen der Abstellfläche (120) und einer Stellfläche (110), abgefahren werden.

3. Verfahren nach Anspruch 2, wobei aus einer Menge möglicher Strecken (135) zwischen allen Stellflächen (110) und der Abstellfläche (120) eine repräsentative Stichprobe an Strecken (135) abgefahren wird.

4. Verfahren nach einem der vorangehenden Ansprüche, wobei ausreichend Strecken (135) zwischen Stellplätzen und der Abstellfläche (120) befahren werden, bis alle Verkehrsflächen (125) des Parkplatzes (105) abgefahren sind.

5. Verfahren nach einem der vorangehenden Ansprüche, wobei das Abfahren einen Ein- oder Ausparkvorgang auf einer Stellfläche (110) umfasst.

6. Verfahren nach einem der vorangehenden Ansprüche, wobei eine Stelle des Parkplatzes (105) bestimmt wird, an der das Abfahren der Strecke (135) nicht korrekt erfolgt.

7. Verfahren nach einem der vorangehenden Ansprüche, wobei die Strecke (135) mit mehreren unterschiedlichen Testfahrzeugen (150) abgefahren wird.

8. Verfahren nach Anspruch 7, wobei zwei Testfahrzeuge (150) jeweils eines oder mehrere Steuersysteme umfassen und sich lediglich in Versionen von Steuerprogrammen der Steuersysteme unterscheiden.

9. Verfahren nach einem der vorangehenden Ansprüche, wobei eine Auswertung des Befahrens mittels des Testfahrzeugs (150) nach Abschluss der Testfahrt erfolgt.

10. Computerprogrammprodukt mit Programmcodemitteln zur Durchführung des Verfahrens nach einem der vorangehenden Ansprüche, wenn das Computerprogrammprodukt auf einer Verarbeitungseinrichtung abläuft oder auf einem computerlesbaren Datenträger gespeichert ist.

11. Testfahrzeug (150) zur Durchführung eines Verfahrens nach einem der Ansprüche 1 bis 6, wobei das Testfahrzeug (150) dazu eingerichtet ist, die Strecke (135) mit unterschiedlichen Versionen der Steuerprogramme abzufahren.

## Claims

1. Checking method for a parking system (100) which comprises a car park (105) with a plurality of parking spaces (110) for parking motor vehicles (115), wherein in the car park (100) a motor vehicle (115) can be controlled autonomously on a route (135) between a parking area (120) and one of the parking spaces, and the method is **characterized by** the following steps:
- autonomous driving along the route (135) with a test vehicle (150);
- determining that the travel along the route (135) takes place correctly; and
- enabling the parking system (100) for use with vehicles which correspond to the vehicle type of the test vehicle (150).

2. Method according to Claim 1, wherein a plurality of routes (135) are each travelled along with the test vehicle (150) between the parking area (120) and a parking space (110).

3. Method according to Claim 2, wherein a representative sample of routes (135) from a set of possible routes (135) between all the parking spaces (110) and the parking area (120) is travelled along.

4. Method according to one of the preceding claims, wherein sufficient routes (135) between the parking spaces and the parking area (120) are travelled along until all the circulation areas (125) of the car park (105) are travelled along.

5. Method according to one of the preceding claims, wherein the travel comprises a process of parking in a parking space (110) and moving out of a parking space (110).

6. Method according to one of the preceding claims, wherein a location of the car park (105) at which the travel along the route (135) does not take place correctly is determined.

7. Method according to one of the preceding claims, wherein the route (135) is travelled along with a plurality of different test vehicles (150).

8. Method according to Claim 7, wherein two test vehicles (150) each comprise one or more control systems and differ only in versions of control programs of the control systems.

9. Method according to one of the preceding claims, wherein an evaluation of the travel by means of the test vehicle (150) is carried out after the conclusion of the test run.

10. Computer program product with program code means for carrying out the method according to one of the preceding claims, when the computer program product runs on a processing device or is stored on a computer-readable data carrier.

11. Test vehicle (150) for carrying out a method according to one of Claims 1 to 6, wherein the test vehicle (150) is configured to travel along the route (135) with different versions of the control programs.

## Revendications

1. Procédé de vérification d'un système de stationnement (100) comprenant un parc de stationnement (105) comportant une pluralité de surfaces d'occupation (110) pour le dépôt de véhicules automobiles (115), dans lequel, dans le système de stationnement (100), un véhicule automobile (115) peut être conduit de manière autonome sur un trajet (135) entre une surface de dépôt (120) et l'une des places d'occupation, et le procédé est **caractérisé par** les étapes suivantes :
- parcours autonome du trajet (135) par un véhicule de test (150) ;
- détermination de la conformité du parcours du trajet (135) ; et
- déblocage du système de stationnement (100) pour permettre son utilisation par des véhicules correspondant au type du véhicule de test (150).

2. Procédé selon la revendication 1, dans lequel le véhicule de test (150) parcourt une pluralité de trajets (135), chacun entre la surface de dépôt (120) et une surface de d'occupation (110).

3. Procédé selon la revendication 2, dans lequel un échantillon aléatoire représentatif de trajets (135) parmi un ensemble de trajets possibles (135) est parcouru entre toutes les surfaces d'occupation (110) et la surface de dépôt (120).

4. Procédé selon l'une des revendications précédentes, dans lequel des trajets suffisants (135) sont parcourus entre des surfaces d'occupation et la surface de dépôt (120) jusqu'à ce que toutes les surfaces de circulation (125) du parc de stationnement (105) aient été parcourues.

5. Procédé selon l'une des revendications précédentes, dans lequel le parcours comprend une opération d'entrée ou de sortie d'une surface d'occupation (110).

6. Procédé selon l'une des revendications précédentes, dans lequel on détermine un parc de stationnement (105) sur lequel le parcours du trajet (135) n'est pas effectué correctement.

7. Procédé selon l'une des revendications précédentes, dans lequel le trajet (135) est parcouru par une pluralité de véhicules de test (150) différents.

8. Procédé selon la revendication 7, dans lequel deux véhicules de test (150) comprennent chacun un ou plusieurs systèmes de conduite et diffèrent uniquement par les versions des programmes de conduite des systèmes de conduite.

9. Procédé selon l'une des revendications précédentes, dans lequel une évaluation de la conduite au moyen du véhicule de test (150) est effectuée après l'achèvement de la conduite de test.

10. Produit de programme d'ordinateur comportant des moyens à code de programme pour mettre en oeuvre le procédé selon l'une des revendications précédentes lorsque le produit de programme d'ordinateur est exécuté sur un dispositif de traitement ou est enregistré sur un support de données lisible par ordinateur.

11. Véhicule de test (150) destiné à mettre en oeuvre un procédé selon l'une des revendications 1 à 6,
dans lequel le véhicule de test (150) est conçu pour faire parcourir le trajet (135) avec différentes versions des programmes de conduite.
